# EUROPÄISCHE PATENTSCHRIFT

(11) **EP 3 300 229 B1**
(45) Veröffentlichungstag und Bekanntmachung des Hinweises auf die Patenterteilung: **15.09.2021**
(21) Anmeldenummer: 16190722.5
(22) Anmeldetag: 27.09.2016
(51) Int. Cl.: H02K 16/00, H02K 41/03, H02K 21/14, G01L 3/10

(54) **HUBDREHVORRICHTUNG**
LIFTING ROTATING DEVICE
DISPOSITIF DE LEVAGE ET DE ROTATION

(43) Veröffentlichungstag der Anmeldung: 28.03.2018
(73) Patentinhaber: NTI AG, 8957 Spreitenbach (CH)
(72) Erfinder: Rohner, Ronald, 8967 Widen (CH)
(74) Vertreter: Bohest AG

(56) Entgegenhaltungen:
- EP-A1- 1 378 986
- EP-A1- 2 733 830
- WO-A1-2011/046516
- DE-A1-102008 038 758
- US-A- 4 432 245

## Beschreibung

Die vorliegende Erfindung betrifft eine Hubdrehvorrichtung gemäss dem Oberbegriff des unabhängigen Patentanspruchs.

Unter Hubdrehvorrichtungen sind Antriebe zu verstehen, bei welchen eine Drehbewegung (Rotation) sowie eine lineare Bewegung auf eine Abtriebswelle geleitet werden. Diese Abtriebswelle kann sich also drehen und gleichzeitig linear bewegen und ist im Folgenden als Hubdrehwelle bezeichnet. Die beiden Bewegungen der Hubdrehwelle sind vollkommen unabhängig voneinander und werden meist durch Elektromotoren ausgeführt. Im linearen Fall handelt es sich um einen linearen Servomotor, auch Linearmotor genannt, im rotativen Fall um eine rotativen Servomotor, häufig auch Torquemotor genannt. Hubdrehvorrichtungen werden unter anderem in Verschliess- und Schraubanwendungen eingesetzt. Dabei geht es nebst dem Einschrauben von Schrauben oder dem Schneiden von Gewinden generell um das Einschrauben von Teilen, welche über ein Gewinde verfügen. Zu diesen Anwendungen gehören insbesondere alle Verschliessprozesse von Behältern und Flaschen, bei denen ein Verschluss mit einem Gewinde aufgesetzt werden muss. Ein weiteres Anwendungsgebiet umfasst alle Handhabungsaufgaben, bei denen ein Produkt oder Fertigungsteil um einen bestimmten Winkel gedreht werden muss, wozu es gefasst, gehoben, gedreht und anschliessend wieder abgelegt wird.

Der Einschraubvorgang einer Schraube oder eines Deckels mit Gewinde besteht aus einer linearen Bewegung in Längsrichtung des Gewindes mit gleichzeitiger Drehbewegung um die Längsachse. Der Zusammenhang zwischen Längs- und Drehbewegung wird in Form der Gewindesteigung beschrieben. Je nach Anwendung werden unterschiedliche Gewindesteigungen benutzt, so dass bei rein mechanischen Einschraubvorrichtungen, bei denen die beiden Bewegungsrichtungen fest miteinander verkoppelt sind, immer Teile ausgetauscht werden müssen, wenn Produkte mit anderer Gewindesteigung verarbeitet werden. Der grosse Vorteil einer Hubdrehvorrichtung, bei der die rotative und die lineare Bewegung unabhängig voneinander gesteuert werden kann, liegt nun darin, dass ein Produktwechsel bzw.

Wechsel der Gewindesteigung per Knopfdruck ausgeführt werden kann und keine mechanischen Anpassungen erfolgen müssen.

Dadurch, dass die rotative und die lineare Bewegung absolut unabhängig voneinander vorgegeben werden können, lassen sich zudem sehr unterschiedliche Strategien für den Verschliessvorgang realisieren: Bei präzise gefertigten Gewinden in Metallteilen ist der Einschraubvorgang mit der Gewindesteigung klar definiert. Anders verhält es sich bei gespritzten, kostenoptimierten Kunststoffgewinden, wie sie etwa bei Einweggebinden vorkommen. Hier können die Toleranzen derart gross sein, dass zum Beispiel eine Strategie sinnvoll sein kann, bei der die lineare Bewegung nicht positionsabhängig von der Drehbewegung abgeleitet wird, sondern in Form einer linearen Vorschubkraft vorgegeben wird. Mit anderen Worten die lineare Bewegung soll dem Gewinde flexibel folgen. Gleichwohl kann es zum Beispiel sinnvoll sein, zu Beginn des Einschraubvorganges den Deckel auf das Gewinde zu pressen, bis der Gewindegang gefunden wurde. All diese Kombinationen lassen sich mit einer Hubdrehvorrichtung auf einfache und direkte Weise realisieren.

Im Detail wird also der eigentliche Prozess des Einschraubens, sei es einer Schraube oder eines Verschlusses, durch eine grosse Zahl von Parametern beschrieben bzw. gesteuert. Zu diesen gehören unter anderem die Dreh- und Vorschubgeschwindigkeit, gegebenenfalls eine lineare Kraftwirkung in Längsrichtung des Gewindes, die Winkelpositionierung der Drehbewegung, sowie der Drehmomentverlauf der Drehbewegung während des gesamten Prozesses und im Besonderen am Ende des Prozesses als Anzugsmoment.

Wie fest eine Schraube oder der Deckel eines Gebindes angezogen werden muss, hängt von vielen Parametern ab. Auch hier gibt es unterschiedliche Strategien. So kann das eigentliche Anzugsmoment vorgeben werden. Es kann aber auch sinnvoll sein, eine bestimmte Winkelverdrehung vorzugeben oder solange zu drehen, bis eine bestimmte lineare Position des Gewindes erreicht wurde. Entsprechend lassen sich beliebige Kombinationen oder Fallunterscheidungen dieser Strategien verwirklichen, sofern die entsprechenden Parameter gesteuert bzw. gemessen werden können.

Ein weiterer Aspekt ist die Kontrolle, ob ein Einschraubvorgang korrekt ausgeführt wurde. Aus den Parametern, Winkelverdrehung, Drehmoment, lineare Position und lineare Kraft bzw. den entsprechenden Verläufen dieser Parameter während des Einschraubprozesses lassen sich in geeigneter Weise verlässliche Rückschlüsse auf den Prozessverlauf ziehen. Damit kann festgestellt werden, ob ein Deckel richtig aufgesetzt und korrekt angezogen wurde. Je nach Anforderung an die Qualitätskontrolle kann es genügen, einzelne Parameter nur als gesteuerten Wert vorzugeben. In anderen Fällen kann es notwendig sein, den effektiven Verlauf des Parameters auch zu messen.

Bei elektromotorisch ausgeführten Verschliessprozessen kann das Drehmoment relativ einfach gesteuert werden. So ist das von einem Elektromotor erzeugte Drehmoment proportional der Drehmomentkonstante des Motors multipliziert mit dem jeweiligen Motorstrom. Je nach Motorart (DC-Motor, AC-Motor, Einphasen-, Mehrphasenmotor, Kommutierungweise, etc.) müssen diese Grössen gegebenenfalls aus mehreren Teilgrössen bestimmt werden. Sofern die Drehmomentkonstante als Typenkonstante des Motors oder als ausgemessene Grösse des jeweiligen Motors bekannt ist, kann das Drehmoment über den Strom gesteuert bzw. aus dem jeweiligen Stromwert berechnet werden. Soll beispielsweise das maximale Anzugsmoment einer Schraube limitiert werden, lässt sich dies also über eine Strombegrenzung beim Motor erreichen.

Eine andere Möglichkeit, das Anzugsmoment festzulegen, besteht darin, mechanische oder magnetische Rutschkupplungen einzusetzen. Derartige Kupplungen lösen die Verbindung zwischen Antrieb und Abtrieb nach Überschreiten des maximalen Drehmomentes. Entsprechend kann das Anzugsmoment einer Schraubverbindung eingestellt werden, ohne dass der Antrieb als solcher geregelt oder gesteuert werden muss. Nachteilig an dieser Art der Drehmomentbegrenzung ist das aufwendige Kalibrieren der Kupplungseinheiten. Zudem kann die Drehmomentbegrenzung nicht einfach via Software verstellt werden, sondern benötigt jeweils einen manuellen Eingriff.

Eine weitere Möglichkeit, den Verschliessprozess bezüglich des Drehmomentes zu kontrollieren, besteht darin, eine effektive Drehmomentmessung auszuführen. Dazu wird im Übertragungspfad zwischen Antrieb, in der Regel ein elektrischer oder pneumatischer Motor, und dem Abtrieb eine Drehmomentmessung ausgeführt. Es gibt diverse hinreichend bekannte Verfahren, wie eine Drehmomentmessung ausgeführt werden kann. Nebst der Messung der Torsion einer Messwelle (z.B. der Hubdrehwelle selbst) über DMS-Streifen werden heute auch optische und magnetostriktive Verfahren eingesetzt, um die Verwindung der Messwelle zu detektieren. Die verschiedenen Verfahren zeichnen sich durch unterschiedliche Eigenschaften und erreichbare Genauigkeiten aus. Weiter kann zwischen Verfahren unterschieden werden, bei denen eine elektrische Verbindung in Form einer Schleifringverbindung zwischen gedrehtem und feststehendem Teil vorhanden sein muss und solchen, bei denen die Übertragung der Informationen kontaktlos ausgeführt wird. Bekanntlich sind Schleifringübertragungen wartungsintensiv bzw. fehleranfällig und werden in Daueranwendungen ungern eingesetzt. Genauso verhält es sich mit Anordnungen, bei denen aufgrund einer linearen Bewegung der Drehmomentmesseinrichtung noch zusätzlich eine Kabelverbindung in Form eines Schleppkabels vorkommt. Auch hier ist es notwendig, dass die bewegten Kabel regelmässig ausgetauscht und ersetzt werden.

Eine Hubdrehvorrichtung der gattungsgemässen Art ist z.B. in der EP 2 733 830 A1 beschrieben. Diese bekannte Hubdrehvorrichtung umfasst einen permanenterregten tubularen Linearmotor und einen an den Linearmotor koaxial angebauten Drehmotor, sowie eine vom Linearmotor und vom Drehmotor antreibbare Hubdrehwelle, deren freies Ende zur Befestigung eines Manipulationswerkzeugs dient. Der Linearmotor weist einen hohlen tubularen Stator und einen in diesem Stator axial verschiebbaren Läufer auf, in welchem die Permanentmagnete des Linearmotors angeordnet sind. Der Drehmotor umfasst im Wesentlichen eine feststehende Statorwicklung und einen innerhalb der Statorwicklung angeordneten hohlen (Innen-)Rotor. Im Falle eines permanenterregten Drehmotors besteht der Rotor beispielsweise aus einer Hohlwelle mit auf der Hohlwelle aufgeklebten Permanentmagneten. Die Hubdrehwelle ist durch die Hohlwelle (Rotor) des Drehmotors hindurch geführt und ist innerhalb des Rotors gelagert. Ferner ist die Hubdrehwelle an den Läufer des Linearmotors (sowohl auf Zug als auch auf Schub) in axialer Richtung kinematisch so angekoppelt, dass die lineare Bewegung des Läufers direkt auf die Hubdrehwelle übertragen wird. Die Ankopplung des Läufers des Linearmotors an die Hubdrehwelle ist dabei so ausgebildet, dass sich eine Drehbewegung der Hubdrehwelle nicht auf den Läufer des Linearmotors überträgt. Der Rotor des Drehmotors ist dazu über eine mechanische Kupplung mit der Hubdrehwelle drehgekoppelt, so dass eine Drehbewegung des Rotors des Drehmotors auf die Hubdrehwelle übertragen wird. Die Ankopplung des Rotors des Drehmotors an die Hubdrehwelle ist dabei so ausgebildet, dass die Hubdrehwelle in axialer Richtung bewegt werden kann, der Rotor dabei aber in axialer Richtung nicht mitbewegt wird. Eine solche mechanische Kupplung, welche die Drehung des Rotors auf die Hubdrehwelle überträgt, kann beispielsweise einen mit dem Rotor drehfest verbundenen Mitnehmer in Form eines Rings mit einer radial nach innen vorspringenden Nase umfassen, welche in eine auf der Hubdrehwelle vorgesehene Längsnut eingreift, die sich parallel zur Längsachse der Hubdrehwelle erstreckt, so dass die Nase in dieser Längsnut gleiten kann. Somit kann ein Drehmoment vom Rotor auf die Hubdrehwelle übertragen werden und gleichzeitig kann die Hubdrehwelle über die Länge der Längsnut eine axiale (lineare) Bewegung ausführen. Zur Übertragung grösserer Drehmomente kann der Mitnehmerring auch mit zwei oder mehreren solchen Nasen und die Hubdrehwelle entsprechend mit zwei oder mehreren Längsnuten versehen sein. Der Drehmotor ist üblicherweise mit einer eingebauten Sensorik zur Erfassung der Drehposition des Rotors und damit der Hubdrehwelle ausgestattet. Ebenso kann der Linearmotor mit einer z.B. in der EP 2 860 496 A1 im Detail erläuterten eingebauten Sensorik zur Erfassung der axialen Position des Läufers und damit der Hubdrehwelle versehen sein.

In Anwendungen, wie zum Beispiel dem Aufschrauben von Deckeln auf Flaschen, befinden sich zwei oder mehrere solcher Hubdrehvorrichtungen nebeneinander oder sind auf einem Drehteller platziert, sodass ein kompakter schlanker Aufbau von grossem Vorteil ist.

Bei der aus der EP 2 733 830 A1bekannten Hubdrehvorrichtung sind der Drehmotor und der Linearmotor axial hintereinander angeordnet. Dadurch ergibt sich zwar eine sehr schlanke Bauform, jedoch ist die Baulänge der Hubdrehvorrichtung relativ gross. Gerade in vertikalen Einbaulagen und Räumen mit geringer Raumhöhe kann aber die Baulänge zu Einschränkungen führen. Eine Hubdrehvorrichtung mit den Merkmalen des Oberbegriffs des Anspruchs 1 ist in WO 2011/046516 A1 offenbart. Eine Drehmomentmessanordnung ist in US 4 432 245 A offenbart.

Eine Aufgabe der vorliegenden Erfindung besteht daher darin, eine Hubdrehvorrichtung der gattungsgemässen Art vorzuschlagen, die in solchen vertikalen Einbaulagen einsetzbar ist, und zwar insbesondere auch dann, wenn nur eine geringe Raumhöhe zur Verfügung steht.

Diese Aufgabe wird erfindungsgemäss durch eine Hubdrehvorrichtung gelöst, wie sie durch die Merkmale des unabhängigen Patentanspruchs spezifiziert ist. Weitere vorteilhafte Aspekte ergeben sich aus den Merkmalen der abhängigen Patentansprüche.

So umfasst die erfindungsgemässe Hubdrehvorrichtung eine Hubdrehwelle mit einer Längsachse, einen Linearmotor zur Bewegung der Hubdrehwelle in Richtung ihrer Längsachse, sowie einen Drehmotor zur Drehung der Hubdrehwelle um ihre Längsachse. Der Drehmotor weist einen Stator und einen hohlen Rotor auf, durch welchen die Hubdrehwelle hindurchgeführt ist und der mit der Hubdrehwelle kinematisch drehgekoppelt ist. Der Linearmotor ist relativ zum Drehmotor ortsfest angeordnet und weist einen Läufer mit einer Bewegungsachse auf, längs welcher der Läufer linear beweglich gelagert ist. Der Läufer ist an einem ersten Längsende der Hubdrehwelle mit der Hubdrehwelle kinematisch gekoppelt in Bezug auf die Bewegung der Hubdrehwelle in Richtung ihrer Längsachse. Der Linearmotor ist seitlich neben dem Drehmotor angeordnet, wobei die Längsachse der Hubdrehwelle parallel zur Bewegungsachse des Läufers des Linearmotors ausgerichtet ist.

Gemäss der Erfindung sind also der Linearmotor und der Drehmotor (eng) nebeneinander angeordnet, wodurch die Baulänge der Hubdrehvorrichtung erheblich reduziert wird und die Vorrichtung trotzdem relativ schlank bleibt. Bei einer sinnvollen technischen Auslegung der Komponenten der Hubdrehvorrichtung ist der Linearmotor das längenbestimmende Element. Dabei setzt sich der Baulängenbedarf des Linearmotors aus der Länge seines Stators mit den Wicklungen sowie dem gewünschten linearen Hub seines Läufers zusammen.

Vorteilhafterweise weist die Hubdrehvorrichtung zur kinematischen Verbindung des Läufers mit dem ersten Längsende der Hubdrehwelle ein sich quer zur Längsachse der Hubdrehwelle und der Bewegungsachse des Läufers des Linearmotors erstreckendes, am Läufer und an der Hubdrehwelle befestigtes Verbindungselement auf. Dadurch ist eine besonders einfache Verbindung von Läufer und Hubdrehwelle realisierbar.

Zweckmässigerweise ist dabei an dem Verbindungselement eine Drehbefestigung für die drehbare Lagerung des ersten Längsendes der Hubdrehwelle angeordnet und das erste Längsende der Hubdrehwelle in Bezug auf die Bewegung der Hubdrehwelle in Richtung ihrer Längsachse fest mit dem Verbindungselement verbunden. Dies stellt eine besonders einfache kinematische Ankopplung der Hubdrehwelle an das Verbindungselement dar.

Vorteilhafterweise ist die Hubdrehwelle durchgehend hohl ausgebildet, wobei das Verbindungselement einen mit der Hubdrehwelle in kommunizierender Verbindung stehenden inneren Anschluss für die Zufuhr von Druckluft oder Vakuum in die Hubdrehwelle aufweist. Dadurch kann durch die Hubdrehwelle hindurch Druckluft oder Vakuum an das abtriebseitige Längsende geführt werden.

Zweckmässigerweise weist die Hubdrehvorrichtung einen ortsfesten äusseren Anschluss für die Zufuhr von Druckluft oder Vakuum auf und ist der äussere Anschluss mit dem inneren Anschluss über eine schraubenlinienförmig um die Längsachse der Hubdrehwelle gewundene flexible Leitung verbunden. Durch die schraubenlinienförmig gewundene flexible Leitung wird eine konstruktiv einfache Verbindung zwischen dem ortsfesten äusseren und dem beweglichen inneren Anschluss erreicht.

Vorteilhafterweise weist die Hubdrehvorrichtung weiterhin einen Konstantkraftgeber zur Beaufschlagung der Hubdrehwelle mit einer zumindest abschnittsweise konstanten Kraft in Richtung der Längsachse der Hubdrehwelle auf. Damit kann beispielsweise die bei vertikaler Einbaulage der Hubdrehvorrichtung auf die Hubdrehwelle wirkende Gewichtskraft kompensiert werden.

Zweckmässigerweise ist der Konstantkraftgeber als magnetischer Konstantkraftgeber ausgebildet mit einem ortsfest angeordneten Teil aus magnetisch leitendem Material und einem parallel zur Längsachse der Hubdrehwelle relativ zu dem ortsfest angeordneten Teil beweglich angeordneten, diametral magnetisierten Teil, wobei der beweglich angeordnete Teil in Bezug auf die Bewegung der Hubdrehwelle in Richtung ihrer Längsachse fest mit der Hubdrehwelle gekoppelt ist. Ein magnetischer Konstantkraftgeber ist konstruktiv besonders einfach realisierbar und benötigt keine Energiezufuhr.

Vorteilhafterweise ist zur festen Kopplung des beweglich angeordneten Teils des Konstantkraftgebers mit der Hubdrehwelle der beweglich angeordnete Teil des Konstantkraftgebers mit dem Verbindungselement kinematisch verbunden. Dies stellt eine besonders einfache Ankopplung des Konstantkraftgebers an die Hubdrehwelle dar.

Vorteilhafterweise ist der Konstantkraftgeber dazu ausgebildet, die Hubdrehwelle in Abhängigkeit von deren Längsposition mit mindestens zwei unterschiedlich hohen Konstantkräften zu beaufschlagen. Dadurch kann der Konstantkraftgeber eine Funktion als Notrückzug übernehmen, wobei aber die Belastung des Linearmotors im Normalbetrieb gering gehalten werden kann.

Vorteilhafterweise sind der Drehmotor, der Linearmotor und der Konstantkraftgeber in einem gemeinsamen Gehäuse angeordnet. Dadurch ergibt sich eine integrierte und besonders kompakte Bauform der Hubdrehvorrichtung, welche sich leicht reinigen lässt.

Die Hubdrehvorrichtung weist weiterhin eine Drehmomentmessanordnung zur Erfassung des vom Drehmotor auf die Hubdrehwelle übertragenen Drehmoments auf. Dies erlaubt es, das von der Hubdrehwelle auf ein Werkstück aufgebrachte Drehmoment präzise zu regeln bzw. zu steuern oder als unabhängige Messgrösse für die Qualitätsprüfung zu verwenden.

Die Drehmomentmessanordnung weist eine hohle, zur Längsachse der Hubdrehwelle koaxiale sowie axial feststehend angeordnete und um die Längsachse der Hubdrehwelle drehbar angeordnete Messwelle auf, durch welche sich die Hubdrehwelle koaxial hindurch erstreckt, wobei die Messwelle an einem Ende mit dem Rotor des Drehmotors kinematisch drehgekoppelt ist und an ihrem anderen Ende mit der Hubdrehwelle kinematisch drehgekoppelt ist, und wobei die Drehmomentmessanordnung eine Sensoranordnung zur Erfassung der durch das Drehmoment bewirkten Torsion der Messwelle aufweist.

Im Folgenden wird die Erfindung anhand eines in der Zeichnung dargestellten Ausführungsbeispiels der Hubdrehvorrichtung detaillierter beschrieben. Es zeigen:
- Fig. 1: eine perspektivische Aussenansicht eines Ausführungsbeispiels der erfindungsgemässen Hubdrehvorrichtung;
- Fig. 2: einen Längsschnitt durch die Hubdrehvorrichtung nach der Schnittebene II der Fig. 1;
- Fig. 3-4: zwei Längsschnitte analog Fig. 2 mit zwei unterschiedlichen Längspositionen der Hubdrehwelle;
- Fig. 5: einen Längsschnitt analog Fig. 2 mit einem zusätzlichen Detail;
- Fig. 6: einen Längsschnitt durch eine Drehmomentmessanordnung der erfindungsgemässen Hubdrehvorrichtung;
- Fig. 7-8: zwei Detailansichten zur Erläuterung einer mechanischen Drehkupplung der erfindungsgemässen Hubdrehvorrichtung,
- Fig. 9: ein Kraft-Weg-Diagramm eines Konstantkraftgebers der erfindungsgemässen Hubdrehvorrichtung, und
- Fig. 10: ein Ausführungsbeispiel der erfindungsgemässen Hubdrehvorrichtung, bei welchem der Drehmotor als Pendelmotor ausgebildet ist.

Für die nachstehende Beschreibung gilt die folgende Festlegung: Sind in einer Figur zum Zweck zeichnerischer Eindeutigkeit Bezugszeichen angegeben, aber im unmittelbar zugehörigen Beschreibungsteil nicht erwähnt, so wird auf deren Erläuterung in vorangehenden oder nachfolgenden Beschreibungsteilen verwiesen. Umgekehrt sind zur Vermeidung zeichnerischer Überladung für das unmittelbare Verständnis weniger relevante Bezugszeichen nicht in allen Figuren eingetragen. Hierzu wird auf die jeweils übrigen Figuren verwiesen.

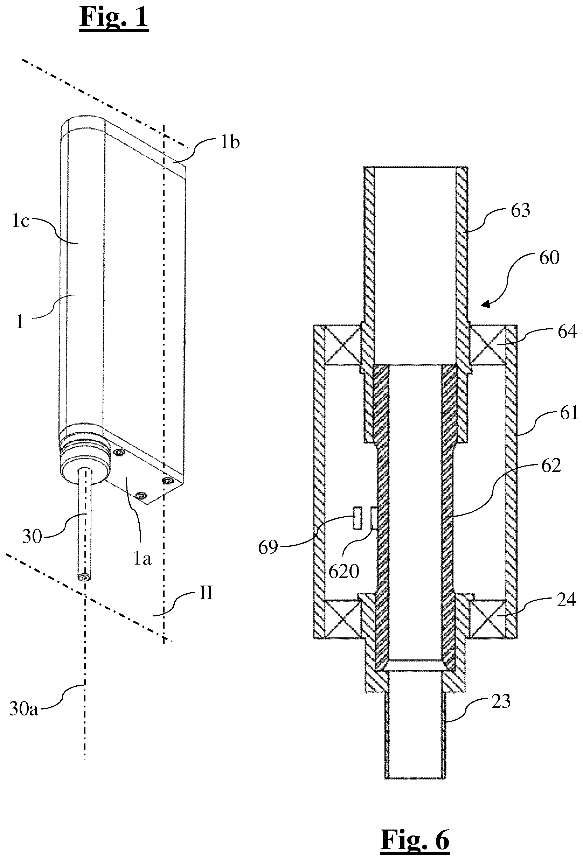

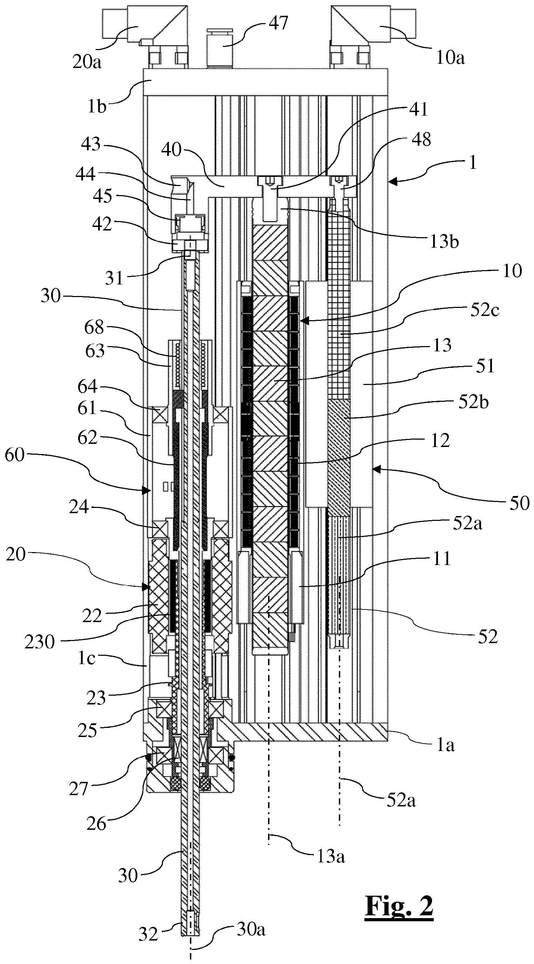

Das in **Fig. 1** **-** **Fig. 5** exemplarisch dargestellte Ausführungsbeispiel der erfindungsgemässen Hubdrehvorrichtung umfasst einen Linearmotor 10, einen Drehmotor 20 und eine Hubdrehwelle 30, die in einem gemeinsamen Gehäuse 1 mit einer vorderen Stirnwand 1a und einer hinteren Stirnwand 1b und einem diese verbindenden Mantel 1c untergebracht sind, wobei die Hubdrehwelle 30 durch die vordere Stirnwand 1a durchgeführt ist und aus dem Gehäuse 1 herausragt. An der hinteren Stirnwand 1b sind zwei elektrische Anschlüsse 10a und 20a für die Bestromung des Linearmotors 10 bzw. des Drehmotors 20 angebracht. Ein weiterer Anschluss (nicht dargestellt) dient gegebenenfalls für die Messung des Drehmoments, sofern diese Messsignale nicht über einen der Anschlüsse 10a oder 20a geführt werden. Der detailliertere Aufbau des Linearmotors 10 und des Drehmotors 20 sowie deren Anordnung im Gehäuse 1 gehen aus den Schnittdarstellungen in den **Figuren 2-5** hervor.

Der Linearmotor 10 umfasst ein ortsfest im Gehäuse 1 angebrachtes rohrförmiges (tubulares) Motorgehäuse 11, in welchem ein (rohrförmiger) Stator 12 mit elektrischen Wicklungen angeordnet ist. Im Inneren des Motorgehäuses 11 innerhalb des Stators 12 ist ein Läufer 13 koaxial angeordnet und längs einer Bewegungsachse 13a **(****Fig. 2****)** gleitend gelagert. Ein abtriebseitiges Längsende des Läufers 13 ist mit 13b bezeichnet. Im Läufer 13 sind beispielsweise Permanentmagnete angeordnet. Der Linearmotor 10 umfasst ferner eine nicht dargestellte Sensorik (Positionsdetektor) zur Erfassung der (z.B. absoluten) axialen Position des Läufers 13 relativ zum Stator 12. Insofern ist der Aufbau des Linearmotors 10 konventionell und bedarf daher keiner weitergehenden Erläuterung. Eine besonders geeignete Positionssensorik für die Messung der Absolutposition des Läufers ist z.B. in der EP 2 860 496 A1detailliert beschrieben.

Der Drehmotor 20 umfasst einen im Gehäuse 1 ortsfest angeordneten Stator 22 mit elektrischen Wicklungen und einen sich koaxial durch den Stator 22 erstreckenden rohrförmigen Rotor 23, der in zwei Drehlagern 24 und 25 drehbar gelagert ist. Der Drehmotor 20 ist vorzugsweise (aber nicht zwingend) als permanenterregter Motor ausgebildet, wobei der Rotor 23 als Hohlwelle mit aufgeklebten Permanentmagneten 230 ausgebildet sein kann. Der Drehmotor 20 umfasst ferner eine nicht dargestellte Sensorik (Positionsdetektor) zur Erfassung der Drehstellung des Rotors 23 (und damit der Hubdrehwelle 30) relativ zum Stator 22. Insofern ist der Aufbau des Drehmotors 20 soweit konventionell und bedarf daher keiner weitergehenden Erläuterung.

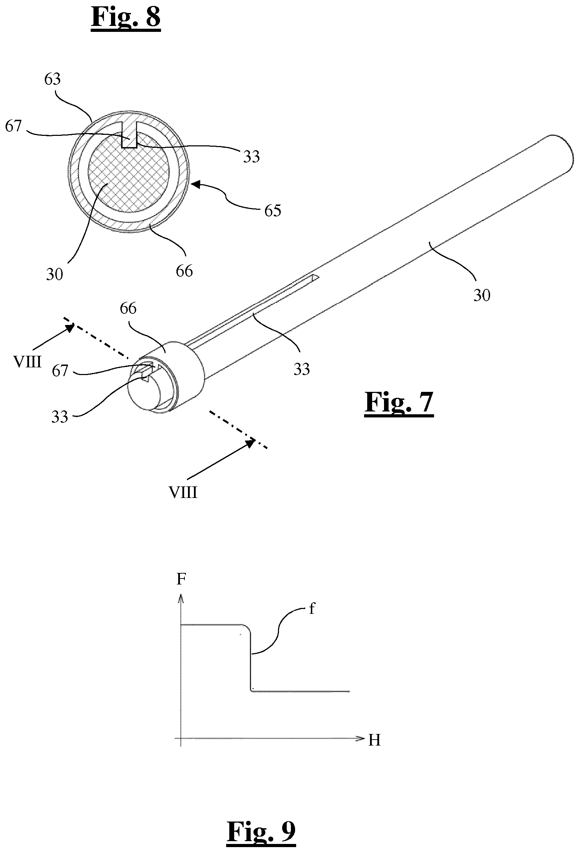

An den Drehmotor 20 schliesst sich koaxial eine in einem rohrförmigen Messgehäuse 61 angeordnete Drehmomentmessanordnung 60 an, welche eine hohle, zum Rotor 23 koaxiale Messwelle 62 aufweist, die an ihrem einen Längsende drehfest mit dem Rotor 23 verbunden ist und von diesem drehend antreibbar ist. An ihrem anderen Längsende ist die Messwelle 62 mit einem koaxialen Mitnehmerrohr 63 drehfest verbunden. Das Mitnehmerrohr 63 ist im Messgehäuse über ein Kugellager 64 drehbar gelagert und nimmt ein Linearlager 68 (z.B. Gleitlager oder Linearkugellager) für die Hubdrehwelle 30 auf. Im Mitnehmerrohr 63 ist ferner eine mechanische Drehkupplung 65 (Fig. 8) zur kinematischen Drehkopplung des Mitnehmerrohrs 63 mit der sich durch den Rotor 23, die Messwelle 62 und das Mitnehmerrohr 63 koaxial hindurch erstreckenden Hubdrehwelle 30 angeordnet. Darauf wird weiter unten noch näher eingegangen.

Die Hubdrehwelle 30 weist eine Längsachse 30a **(****Fig. 1** **und** **Fig. 2****)** auf und erstreckt sich koaxial durch den Rotor 23 des Drehmotors 20 sowie die Messwelle 62 und das Mitnehmerrohr 63 hindurch. Die Hubdrehwelle 30 weist ein erstes Längsende 31 im Inneren des Gehäuses 1 sowie ein zweites Längsende 32 ausserhalb des Gehäuses 1 auf. Die Hubdrehwelle 30 ist in zwei Gleitlagern 26 und 68 (oder entsprechenden Linearkugellagern) gelagert, sodass sie relativ zum (axial feststehenden) Rotor 23 in Richtung ihrer Längsachse 30a (also axial) bewegbar ist. Das Gleitlager 26 ist seinerseits in einem Kugellager 27 drehbar gelagert, das Gleitlager 68 ist über das im Kugellager 64 drehbare Mitnehmerrohr 63 drehbar gelagert. Damit ist die Hubdrehwelle 30 also auch um ihre Längsachse 30a drehbar.

Die Hubdrehwelle 30 ist mit dem Rotor 23 des Drehmotors 20 (über die Messwelle 62 und das Mitnehmerrohr 63) mittels der in den Detailansichten der **Fig. 7 und Fig. 8** dargestellten mechanischen Drehkupplung 65 kinematisch (nur) auf Drehung (um ihre Längsachse 30a) gekoppelt. Die mechanische Drehkupplung 65 umfasst einen mit dem Mitnehmerrohr 63 drehfest verbundenen Mitnehmerring 66, an dessen Innenseite eine radial nach innen ragende Nase 67 ausgebildet bzw. angeordnet ist. Die Nase 67 des Mitnehmerrings 66 greift in eine parallel zur Längsachse 30a der Hubdrehwelle 30 angeordnete Längsnut 33 der Hubdrehwelle 30 ein und gleitet in dieser, wenn die Hubdrehwelle 30 (durch den Linearmotor 10) axial bewegt wird. Durch den Mitnehmerring 66 und dessen in die Längsnut 33 eingreifende Nase 67 wird die Drehbewegung des Rotors 23 des Drehmotors 20 (über die Messwelle 62 und das Mitnehmerrohr 63) auf die Hubdrehwelle 30 übertragen. Selbstverständlich kann der Mitnehmerring 66 auch zwei oder mehreren Nasen umfassen und die Hubdrehwelle 30 entsprechend mit zwei oder mehreren Längsnuten ausgestattet sein.

Wie aus den Figuren 2-5 deutlich ersichtlich ist, sind der Linearmotor 10 und der Drehmotor 20 (eng) seitlich neben einander angeordnet, wobei die Längsachse 30a der Hubdrehwelle 30 und die Bewegungsachse 13a des Läufers 13 des Linearmotors 10 parallel zu einander verlaufen. Das abtriebseitige Längsende 13b des Läufers 13 des Linearmotors 10 steht axial etwas über das erste Längsende 31 der Hubdrehwelle 30 hinaus.

Auf dem abtriebseitigen Längsende 13b des Läufers 13 des Linearmotors 10 ist z.B. mittels einer Schraube 41 ein (z.B. plattenförmiges oder stegförmiges) Verbindungselement 40 befestigt, welches sich quer zur Längsachse 30a der Hubdrehwelle 30 und zur Bewegungsachse 13a des Läufers 13 erstreckt. Das Verbindungselement 40 weist eine Drehbefestigung 42 für das erste Längsende 31 der Hubdrehwelle 30 auf, wobei die Drehbefestigung 42 eine Drehbewegung der Hubdrehwelle 30 um ihre Längsachse 30a erlaubt, die Hubdrehwelle 30 aber in axialer Richtung bezüglich des Verbindungselements 40 ortsfest hält. Mittels des Verbindungselements 40 sind der Läufer 13 des Linearmotors 10 und die Hubdrehwelle 30 in axialer Richtung kinematisch sowohl auf Schub als auch auf Zug gekoppelt, so dass die Hubdrehwelle 30 durch den Linearmotor 10 in Richtung ihrer Längsachse 30a bewegt werden kann. Andererseits ist die Hubdrehachse 30 durch den Drehmotor 20 um ihre Längsachse 30a drehbar, so dass sie eine kombinierte Hubdrehbewegung durchführen kann.

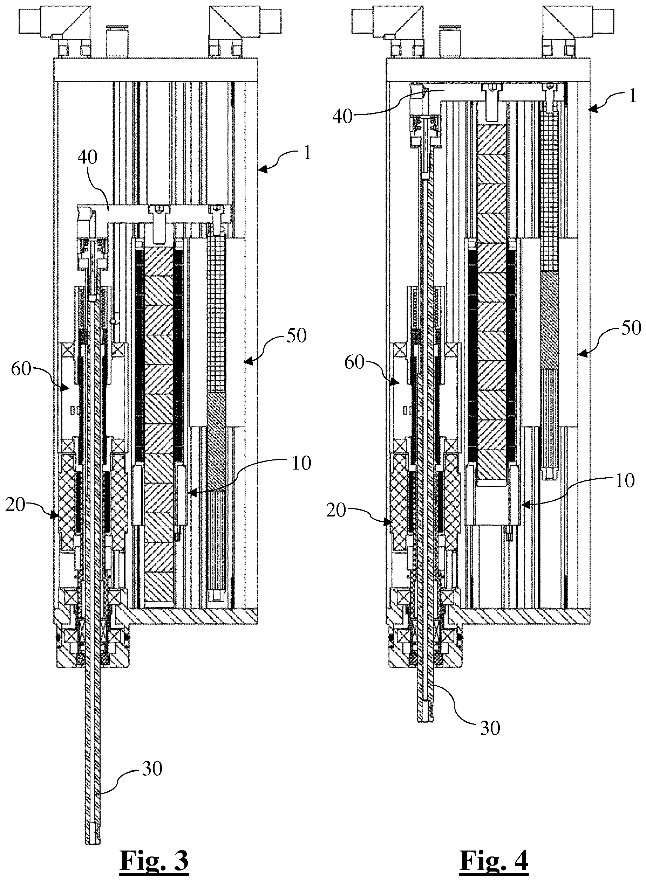

**Fig. 3 und Fig. 4** zeigen die erfindungsgemässe Hubdrehvorrichtung in zwei verschiedenen Positionen der Hubdrehwelle 30. In **Fig. 3** ist die Hubdrehwelle 30 ausgefahren, in **Fig. 4** ist die Hubdrehwelle 30 eingefahren. Ansonsten unterscheiden sich die Darstellungen der Figuren 3 und 4 nicht von der Darstellung in Fig. 2.

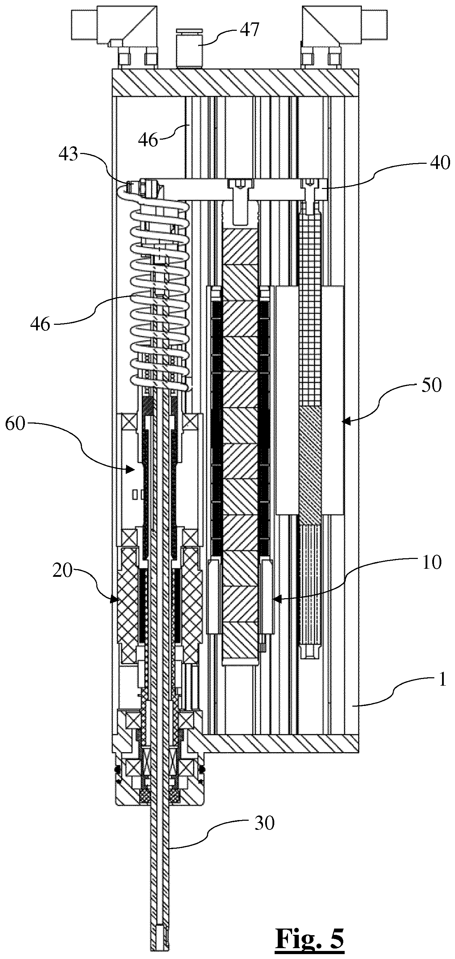

Für viele Einsatzgebiete der Hubdrehvorrichtung ist es erforderlich, dass am abtriebseitigen Längsende 32 der Hubdrehwelle 30 Druckluft oder Vakuum zur Verfügung steht. Die Hubdrehwelle 30 ist daher durchgehend hohl (bzw. rohrförmig) ausgebildet. Am Verbindungselement 40 ist ein innerer Anschluss 43 angeordnet, der mit dem Innenraum der (hohlen) Hubdrehwelle über eine Leitung 44 und eine Drehdichtung 45 in kommunizierender Verbindung steht. An den inneren Anschluss 43 ist mit ihrem einen Ende eine flexible Leitung 46 angeschlossen **(****Fig. 5****),** welche mit ihrem anderen Ende zu einem am Gehäuse 1 angeordneten äusseren Anschluss 47 führt. Somit kann über den äusseren Anschluss 47, die flexible Leitung 46, den inneren Anschluss 43, die Leitung 44 und den Innenraum der Hubdrehwelle 30 Druckluft oder Vakuum zum abtriebseitigen Längsende 32 der Hubdrehwelle 30 geführt werden.

Die flexible Leitung 46 ist aus Gründen der Übersichtlichkeit nur in **Fig. 5** dargestellt. Sie ist bezüglich der Längsachse 30a der Hubdrehwelle 30 schraubenlinienförmig um die zwischen dem Verbindungselement 40 und der Drehmomentmessanordnung 60 befindlichen Komponenten gewunden, so dass sich ihre Länge bei der linearen Bewegung der Hubdrehwelle 30 einfach an die jeweilige Längsposition des Verbindungselements 40 anpassen kann. Selbstverständlich kann die Zuführung der Druckluft bzw. des Vakuums vom äusseren Anschluss 47 zum inneren Anschluss 43 z.B. auch über eine Schiebedichtung erfolgen.

Die Drehmomentmessanordnung 60 ist in Fig. 6 etwas schematisiert in grösserem Massstab dargestellt. Sie umfasst neben den schon beschriebenen Komponenten eine aus einem an der Messwelle 62 befestigten und mit dieser mitdrehenden Teil 620 und einem örtlich feststehenden Teil 69 bestehende Sensorik zur Erfassung der Verwindung bzw. Torsion der Messwelle 62. Die Torsion der Messwelle wir z.B. mittels DMS-Streifen (Dehnungsmessstreifen) erfasst, welche im Winkel von ±45° zur Schubebene auf der Messwelle aufgeklebt sind, so wie dies beispielsweise auf Seite 8 in dem Artikel "Anwendung der Wheatstoneschen Brückenschaltung" von Karl Hoffmann der Firma Hottinger Baldwin Messtechnik GmbH, Darmstadt, Deutschland (http://www.hbm.com.pl/pdf/w1188.pdf) beschrieben ist, oder in dem Artikel "Applikation einer Drehmomentmessstelle" der Firma Telemetrie-Messtechnik Schnorrenberg, Bergisch-Gladbach, Deutschland (http://www.telemetrie-world.de/fachartikel/5.%20Applikation%20einer%20Drehmomentmessstelle.pdf). Die Messwelle 62 wird an einem Ende vom Rotor 23 des Drehmotors 20 angetrieben und treibt mit ihrem anderen Ende über das Mitnemerrohr 63 und die mechanische Drehkupplung 65 die Hubdrehwelle 30 an. Das so vom Drehmotor 20 auf die Hubdrehwelle 30 übertragene Drehmoment bewirkt eine Verwindung der Messwelle 62, die mit der Sensorik erfasst wird und ein Mass für das Drehmoment darstellt. Geeignete Sensoriken für die Erfassung der Verwindung der Messwelle 62 sind bekannt und bedürfen deshalb keiner näheren Erläuterung.

Die Messwelle 62 kann auch als käfigartige Struktur mit achsparallelen Stäben (mit z.B. kreisförmigem Querschnittsprofil) ausgebildet sein, welche den Rotor 23 des Drehmotors 20 mit dem Mitnehmerrohr 63 verbinden, wobei statt Stäben auch Flachprofile mit rechteckigem Querschnittsprofil verwendet werden können.

Ein grosser Vorteil der vorstehend beschriebenen Drehmomentmessanordnung besteht darin, dass sie linear ortsfest angeordnet ist, so dass bei Verwendung der heute üblichen berührungslosen Übertragungssystemen zwischen dem mitdrehenden Sensorikteil 620 und dem feststehenden Sensorikteil 69 also weder Schleifringe noch bewegte Kabel erforderlich sind, und dies, obwohl die Hubdrehwelle im Betrieb sowohl eine Dreh- als auch eine (axiale) lineare Bewegung ausführen kann (siehe auch Artikel "Entwicklung und Zukunft der Drehmomentmesstechnik", Dr. Wilfried Krimmel, Lorenz Messtechnik GmbH, https://www.transmetra.ch/image/ publikationen/drehmomentmes stechnik.pdf).

Selbstverständlich ist es auch möglich, die Hubdrehwelle 30 bzw. einen zwischen dem Rotor 23 des Drehmotors 20 und der mechanischen Drehkupplung 65 liegenden Abschnitt derselben als Messwelle einzusetzen. Dies bedingt jedoch, dass die Sensorik für die Verwindung der Messwelle bzw. ein Teil davon mitbewegt werden muss.

Wenn die Hubdrehvorrichtung wie dargestellt vertikal, d.h. mit vertikaler Ausrichtung der Längsachse 30a der Hubdrehwelle 30 betrieben wird, wie dies bei Verschliessanwendungen meistens der Fall ist, muss der Linearmotor 10 immer gegen die Gewichtskraft der Hubdrehwelle 30 und aller mit ihr verbundenen bzw. an ihrem abtriebseitigen Längsende 32 montierten Komponenten arbeiten. Dadurch wird der Linearmotor 10 stärker belastet, als es nur für die Linearbewegung der Hubdrehwelle 30 alleine erforderlich wäre. Zur Kompensation dieser Gewichtskraft ist im Gehäuse 1 unmittelbar neben dem Linearmotor 10 ein Kompensationselement in Form eines magnetischen Konstantkraftgebers 50 angeordnet. Der Konstantkraftgeber 50 umfasst einen feststehenden rohrförmigen Teil 51 aus magnetisch leitendem Material und einen darin koaxial beweglich angeordneten Teil 52. Die parallel zur Bewegungsachse 13a des Läufers 13 des Linearmotors 10 ausgerichtete Bewegungsachse des beweglichen Teils 52 ist mit 52a bezeichnet. Der bewegliche Teil 52 ist aus zwei magnetisierten Abschnitten 52a und 52b mit (unterschiedlich starker) diametraler Magnetisierung und einem dritten Abschnitt 52c aus magnetisch nicht leitendem Material zusammengesetzt. Der dritte Abschnitt 52c ist z.B. mittels einer Schraube 48 mit dem Verbindungselement 40 verbunden. Der Konstantkraftgeber 50 übt indirekt über das Verbindungselement 40 eine (im praktischen Einsatz der Hubdrehvorrichtung) nach oben gerichtete Kraft auf die Hubdrehwelle 30 auf und kompensiert dadurch die Gewichtskraft (ganz oder teilweise). Aufbau und Wirkungsweise des Konstantkraftgebers 50 sind z.B. in der EP 1 378 986 A1 im Detail beschrieben, so dass der Fachmann diesbezüglich keiner weiteren Erläuterungen bedarf.

Die Gewichtskraftkompensation könnte natürlich auch mittels einer mechanischen Feder erfolgen. Auch eine pneumatische Kompensationsvorrichtung wäre denkbar.

In Einsatzfällen mit horizontaler Ausrichtung der Hubdrehwelle ist keine Gewichtskraftkompensation erforderlich, so dass in diesen Fällen der Konstantkraftgeber 50, der ohnehin optional ist, keine Gewichtskraftkompensation bewirken kann.

Wenn die beiden Abschnitte 52a und 52b des beweglichen Teils 52 des Konstantkraftgebers 50 gleich stark (diametral) magnetisiert sind, so ist die auf die Hubdrehwelle 30 einwirkende Gewichtskompensationskraft über den gesamten linearen Bewegungshub der Hubdrehwelle 30 konstant. Gemäss einem weiteren Aspekt der Erfindung ist die Stärke der diametralen Magnetisierung in den beiden Abschnitten 52a und 52b jedoch unterschiedlich, was z.B. durch Verwendung unterschiedlich starker Magneten in den Abschnitten 52a bzw. 52b realisierbar ist. Durch die unterschiedlich starke Magnetisierung ist die auf die Hubdrehwelle 30 ausgeübte Gewichtskompensationskraft wegabhängig, d.h. abhängig von der axialen Position der Hubdrehwelle 30, so wie dies im Kraft-Weg-Diagramm der **Fig. 9** schematisch dargestellt ist. Im Diagramm ist auf der Abszisse der Hub H (die axiale Position) der Hubdrehwelle 30 und auf der Ordinate die auf die Hubdrehwelle ausgeübte Gewichtskompensationskraft F aufgetragen. Der Graph der Gewichtskompensationskraft ist mit f bezeichnet. Wie man erkennt, beträgt die Kraft F bis zu einem bestimmten Hub einen ersten konstanten Wert und danach einen zweiten, gegenüber dem ersten Wert niedrigeren konstanten Wert.

Hubdrehvorrichtungen werden häufig auf Karussellanordnungen eingesetzt. Wenn aus irgendeinem Grund ein Fehler auftritt, z. b. dass die Stromversorgung ausfällt, dann müssen alle Hubdrehwellen der Hubdrehvorrichtungen nach oben gezogen werden, um bei drehendem Karussell eine Kollision zu verhindern. Denn das Karussell ist üblicherweise so schwer, dass dessen Bremsweg in jedem Fall zu lange ist, um eine Kollision zu verhindern.

Der Konstantkraftgeber 50 kann somit neben der Gewichtskraftkompensation auch noch die Funktion eines Notrückzuges übernehmen, wenn die von ihm auf die Hubdrehwelle ausgeübte Kraft ausreichend gross ist, um die Hubdrehwelle mit allen daran befestigten Elementen im Notfall nach oben zu beschleunigen. Der Einsatz eines solchen starken Konstantkraftgebers bedeutet aber, dass im Normalbetrieb der Linearmotor 10 die Hubdrehachse 30 mit grosser Kraft nach unten drücken muss.

Dies führt dazu, dass der Linearmotor sehr schnell überhitzt. Eine vorteilhafte Lösung für dieses Problem liegt nun darin, dass der Konstantkraftgeber 50 wie vorstehend beschrieben dazu ausgebildet ist, eine positionsabhängige Kraft zu erzeugen. Beispielsweise erzeugt der Konstantkraftgeber 50 bei ausgefahrener Hubdrehwelle 30 im Bereich von 70-100 mm eine Kraft von 60 N, im Bereich von 0-70 mm aber lediglich 30 N. Im Normalbetrieb muss der Linearmotor 10 also nur im Bereich 70-100 mm die vollen 60 N Kraft überwinden, ansonsten lediglich 30 N, jeweils abzüglich der masseabhängigen Gewichtskraft.

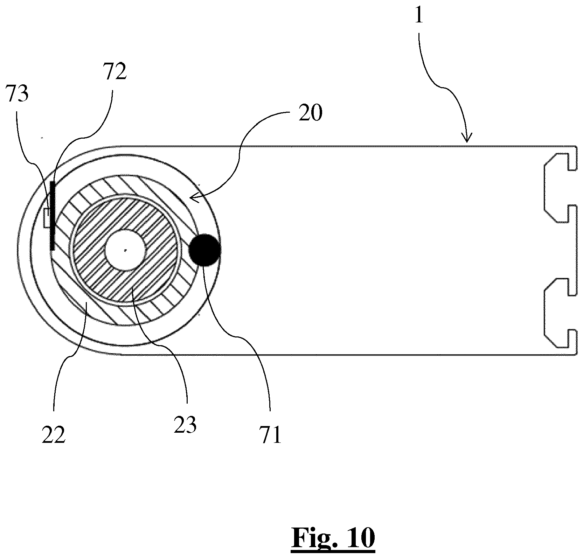

Alternativen zu dem beschriebenen Ausführungsbeispielen sind denkbar. Beispielsweise kann der Drehmotor 20 als sogenannter Pendelmotor ausgebildet sein, wobei ein von der Hubdrehvorrichtung aufgebrachtes Drehmoment indirekt gemessen werden kann. Wie das prinzipiell etwa erfolgen kann, ist schematisch in **Fig. 10** gezeigt, in welcher die Hubdrehwelle aus Gründen der zeichnerischen Vereinfachung nicht dargestellt ist, sie ist im Innern des Rotors 23 des Drehmotors 20 angeordnet. Beim Aufbringen eines Drehmoments führt das von der Hubdrehvorrichtung aufgebrachte Drehmoment zu einem Reaktionsdrehmoment welches auf den Drehmotor 20 wirkt. Der Stator 22 des Drehmotors ist um ein Axiallager 71 herum schwenkbar gelagert. Das Reaktionsdrehmoment führt zu einer Verschwenkung des Stators 22 um das Axiallager 71 herum. Sowohl mit dem Stator 22 des Drehmotors als auch mit dem gemeinsamen (ortsfesten) Gehäuse 1 der Hubdrehvorrichtung ist ein Messelement verbunden, welches einen als "Biegebalken" wirkendes Verbindungselement 72 (z.B. in Form eines Stegs) sowie eine Sensorik 73 umfasst. Aufgrund der Verschwenkung wird das Verbindungselement (der "Biegebalken") entweder gestaucht oder gestreckt (je nachdem in welche Richtung die Verschwenkung erfolgt). Die Sensorik 73 erfasst diese Stauchung oder Streckung (und damit quasi das Reaktionsmoment auf das von der Hubdrehvorrichtung aufgebrachte Drehmoment) und kann dann daraus das aufgebrachte Drehmoment berechnen.

Die Erfindung wurde anhand eines Ausführungsbeispiels erläutert, soll jedoch nicht auf das Ausführungsbeispiel beschränkt sein. Vielmehr sind für den Fachmann zahlreiche Modifikationen denkbar, ohne dabei von der Lehre der Erfindung abzuweichen. Der Schutzbereich wird daher durch die nachstehenden Patentansprüche definiert.

## Patentansprüche

1. Hubdrehvorrichtung mit einer Hubdrehwelle (30) mit einer Längsachse (30a), mit einem Linearmotor (10) zur Bewegung der Hubdrehwelle (30) in Richtung ihrer Längsachse (30a), sowie mit einem Drehmotor (20) zur Drehung der Hubdrehwelle (30) um ihre Längsachse (30a), wobei der Drehmotor (20) einen Stator und einen Rotor (23) aufweist, durch welchen die Hubdrehwelle (30) hindurchgeführt ist und welcher mit der Hubdrehwelle (30) kinematisch drehgekoppelt ist, und wobei der Linearmotor (10) relativ zum Drehmotor (20) ortsfest angeordnet ist und einen Läufer (13) mit einer Bewegungsachse (13a) aufweist, längs welcher der Läufer (13) linear beweglich gelagert ist, wobei der Läufer (13) an einem ersten Längsende (31) der Hubdrehwelle (30) mit der Hubdrehwelle (30) kinematisch gekoppelt ist in Bezug auf die Bewegung der Hubdrehwelle (30) in Richtung ihrer Längsachse (30a), wobei der Linearmotor (10) seitlich neben dem Drehmotor (20) angeordnet ist, und wobei die Längsachse (30a) der Hubdrehwelle (30) parallel zur Bewegungsachse (13a) des Läufers (13) des Linearmotors (10) ausgerichtet ist,
**dadurch gekennzeichnet,**
**dass** der Rotor (23) hohl ist,
und **dass** die Hubdrehvorrichtung eine Drehmomentmessanordnung (60) zur Erfassung des vom Drehmotor (20) auf die Hubdrehwelle (30) übertragenen Drehmoments aufweist, wobei die Drehmomentmessanordnung (60) eine hohle, zur Längsachse (30a) der Hubdrehwelle (30) koaxiale sowie axial feststehend angeordnete und um die Längsachse (30a) der Hubdrehwelle (30) drehbar angeordnete Messwelle (62) aufweist, wobei sich die Hubdrehwelle (30) koaxial durch die Messwelle (62) hindurch erstreckt, wobei die Messwelle (62) an einem Ende mit dem Rotor (23) des Drehmotors (20) kinematisch drehgekoppelt ist und an ihrem anderen Ende mit der Hubdrehwelle (30) kinematisch drehgekoppelt ist, und wobei die Drehmomentmessanordnung (60) eine Sensoranordnung (68, 69) zur Erfassung der durch das Drehmoment bewirkten Torsion der Messwelle (62) aufweist.

2. Hubdrehvorrichtung nach Anspruch 1, **dadurch gekennzeichnet, dass** sie zur kinematischen Verbindung des Läufers (13) mit dem ersten Längsende (31) der Hubdrehwelle (30) ein sich quer zur Längsachse (30a) der Hubdrehwelle (30) und der Bewegungsachse (13a) des Läufers (13) des Linearmotors (10) erstreckendes, am Läufer (13) und an der Hubdrehwelle (30) befestigtes Verbindungselement (40) aufweist.

3. Hubdrehvorrichtung nach Anspruch 2, **dadurch gekennzeichnet, dass** an dem Verbindungselement (40) eine Drehbefestigung (42) für die drehbare Lagerung des ersten Längsendes (31) der Hubdrehwelle (30) angeordnet ist, und dass das erste Längsende (31) der Hubdrehwelle (30) in Bezug auf die Bewegung der Hubdrehwelle (30) in Richtung ihrer Längsachse (30a) fest mit dem Verbindungselement (40) verbunden ist.

4. Hubdrehvorrichtung nach einem der Ansprüche 1 bis 3, **dadurch gekennzeichnet, dass** die Hubdrehwelle (30) durchgehend hohl ausgebildet ist und dass das Verbindungselement (40) einen mit der Hubdrehwelle (30) in kommunizierender Verbindung stehenden inneren Anschluss (43) für die Zufuhr von Druckluft oder Vakuum in die Hubdrehwelle (30) aufweist.

5. Hubdrehvorrichtung nach Anspruch 4, **dadurch gekennzeichnet, dass** sie einen ortsfesten äusseren Anschluss (47) für die Zufuhr von Druckluft oder Vakuum aufweist und dass der äussere Anschluss (47) mit dem inneren Anschluss (43) über eine schraubenlinienförmig um die Längsachse (30a) der Hubdrehwelle (30) gewundene flexible Leitung (46) verbunden ist.

6. Hubdrehvorrichtung nach einem der Ansprüche 1 bis 5, **dadurch gekennzeichnet, dass** sie weiterhin einen Konstantkraftgeber (50) zur Beaufschlagung der Hubdrehwelle (30) mit einer zumindest abschnittsweise konstanten Kraft in Richtung der Längsachse (30a) der Hubdrehwelle (30) aufweist.

7. Hubdrehvorrichtung nach Anspruch 6, **dadurch gekennzeichnet, dass** der Konstantkraftgeber (50) als magnetischer Konstantkraftgeber ausgebildet ist mit einem ortsfest angeordneten Teil (51) aus magnetisch leitendem Material und einem parallel zur Längsachse (30a) der Hubdrehwelle (30) relativ zu dem ortsfest angeordneten Teil (51) beweglich angeordneten, diametral magnetisierten Teil (52), wobei der beweglich angeordnete Teil (52) in Bezug auf die Bewegung der Hubdrehwelle (30) in Richtung ihrer Längsachse (30a) fest mit der Hubdrehwelle (30) gekoppelt ist.

8. Hubdrehvorrichtung nach Anspruch 2 und einem der Ansprüche 6 oder 7, **dadurch gekennzeichnet, dass** zur festen Kopplung des beweglich angeordneten Teils (52) des Konstantkraftgebers (50) mit der Hubdrehwelle (30) der beweglich angeordnete Teil (52) des Konstantkraftgebers (50) mit dem Verbindungselement (40) kinematisch verbunden ist.

9. Hubdrehvorrichtung nach einem der Ansprüche 6 bis 8, **dadurch gekennzeichnet, dass** der Konstantkraftgeber (50) dazu ausgebildet ist, die Hubdrehwelle (30) in Abhängigkeit von deren Längsposition mit mindestens zwei unterschiedlich hohen Konstantkräften zu beaufschlagen.

10. Hubdrehvorrichtung nach einem der Ansprüche 6 bis 9, **dadurch gekennzeichnet, dass** der Drehmotor (20), der Linearmotor (10) und der Konstantkraftgeber (50) in einem gemeinsamen Gehäuse (1) angeordnet sind.

## Claims

1. Rotary lifting device comprising a rotary lifting shaft (30) having a longitudinal axis (30a), a linear motor (10) for moving the rotary lifting shaft (30) in the direction of its longitudinal axis (30a), and a rotary motor for rotating (20) the rotary lifting shaft (30) about its longitudinal axis (30a), wherein the rotary motor (20) has a stator and a hollow rotor (23), through which the rotary lifting shaft (30) extends and which is rotationally kinematically coupled to the rotary lifting shaft (30), and wherein the linear motor (10) is arranged stationary relative to the rotary motor (20) and has an armature (13) having a motion axis (13a) along which the armature (13) is supported so as to be linearly movable, wherein the armature (13) is kinematically coupled to the rotary lifting shaft (30) with respect to the movement of the rotary lifting shaft (30) in the direction of its longitudinal axis (30a) at a first longitudinal end (31) of the rotary lifting shaft (30), wherein the linear motor (10) is arranged laterally beside the rotary motor (20), with the longitudinal axis (30a) of the rotary lifting shaft (30) being arranged parallel to the axis of motion (13a) of the armature (13) of the linear motor (10),
**characterized in that**
the rotor (23) is hollow,
and **in that** the rotary lifting device comprises a torque measurement assembly (60) for determining the torque transmitted from the rotary motor (20) to the rotary lifting shaft (30), wherein the torque measurement assembly (60) has a hollow rotationally arranged measuring shaft (62) which is arranged axially fixed and coaxial to the longitudinal axis (30a) of the rotary lifting shaft (30, wherein the rotary lifting shaft (30) extends coaxially through the measuring shaft (62), wherein the measuring shaft (62) at one end is rotationally kinematically coupled to the rotor (23) of the rotary motor (20) and at its other end is rotationally kinematically coupled to the rotary lifting shaft (30), and wherein the torque measurement assembly (60) has a sensor assembly (68, 69) for determination of the torsion of the measuring shaft (62) caused by the torque.

2. Rotary lifting device according to claim 1, **characterized in that** for the kinematical connection of the armature (13) with the first longitudinal end (31) of the rotary lifting shaft (30), the rotary lifting shaft (30) comprises a connection element (40) which extends transverse to the longitudinal axis (30a) of the rotary lifting shaft (30) and to the motion axis (13a) of the armature (13) of the linear motor (30) and which is connected to the armature (13) and to the rotary lifting shaft (30).

3. Rotary lifting device according to claim 2, **characterized in that** at the connection element (40) a rotatable fixation (42) is arranged for the rotational support of the first longitudinal end (31) of the rotary lifting shaft (30), and wherein the first longitudinal end (31) of the rotary lifting shaft (30) is firmly connected to the connection element (40) with respect to the motion of the rotary lifting shaft (30) in the direction of its longitudinal axis (30a).

4. Rotary lifting device according to any one of claims 1 to 3, **characterized in that** the rotary lifting shaft (30) is entirely hollow, and wherein the connection element (40) comprises an internal port (43) which is in communicating connection with the rotary lifting shaft (30) for the supply of compressed air or vacuum into the rotary lifting shaft (30).

5. Rotary lifting device according to claim 4, **characterized in that** it further comprises a stationary external port (47) for the supply of compressed air or vacuum, wherein the external port (47) and the internal port (43) are connected through a flexible tube (46) which is helically wound about the longitudinal axis (30a) of the rotary lifting shaft (30).

6. Rotary lifting device according to any one of claims 1 to 5, **characterized in that** it further comprises a constant force generator (50) for the application of an at least sectionally constant force to the rotary lifting shaft (30) in the direction of the longitudinal axis (30a) of the rotary lifting shaft (30).

7. Rotary lifting device according to claim 6, **characterized in that** the constant force generator (50) is a magnetic constant force generator having a stationary part (51) made of a magnetically conductive material and a diametrically magnetized part (52) which is movably arranged parallel to the longitudinal axis (30a) of the rotary lifting shaft (30) relative to the stationary part (51), wherein the movably arranged part (52) is firmly coupled to the rotary lifting shaft (30) with respect to the movement of the rotary lifting shaft (30) in the direction of its longitudinal axis (30a).

8. Rotary lifting device according to claim 2 and any one of claims 6 or 7, **characterized in that** for the firmly coupling of the movably arranged part (52) of the constant force generator (50) to the rotary lifting shaft (30), the movably arranged part (52) of the constant force generator (50) is kinematically connected to the connection element (40).

9. Rotary lifting device according to any one of claims 6 to 8, **characterized in that** the constant force generator (50) is configured to apply at least two different constant forces to the rotary lifting shaft (30), depending on its longitudinal position.

10. Rotary lifting device according to any one of claims 6 to 9, **characterized in that** the rotary motor (20), the linear motor (10) and the constant force generator (50) are arranged in a common housing (1).

## Revendications

1. Dispositif de levage et de rotation comprenant un arbre (30) de levage et de rotation muni d'un axe longitudinal (30a), un moteur linéaire (10) conçu pour mouvoir l'arbre (30) de levage et de rotation dans la direction de son axe longitudinal (30a), ainsi qu'un moteur rotatif (20) conçu pour faire tourner ledit arbre (30) de levage et de rotation autour de son axe longitudinal (30a), sachant que le moteur rotatif (20) comporte un stator et un rotor (23) qui est traversé par l'arbre (30) de levage et de rotation et est couplé cinématiquement en rotation audit arbre (30) de levage et de rotation, et sachant que le moteur linéaire (10) occupe un emplacement fixe par rapport audit moteur rotatif (20), et présente une armature (13) munie d'un axe de mouvement (13a) le long duquel l'armature (13) est montée avec mobilité linéaire, ladite armature (13) étant couplée cinématiquement à l'arbre (30) de levage et de rotation par rapport au mouvement dudit arbre (30) de levage et de rotation dans la direction de son axe longitudinal (30a), au niveau d'une première extrémité longitudinale (31) dudit arbre (30) de levage et de rotation, ledit moteur linéaire (10) jouxtant latéralement ledit moteur rotatif (20), et ledit axe longitudinal (30a) de l'arbre (30) de levage et de rotation étant orienté parallèlement audit axe de mouvement (13a) de ladite armature (13) du moteur linéaire (10),
**caractérisé par le fait**
**que** le rotor (23) est creux ;
et par le fait que ledit dispositif de levage et de rotation est doté d'un agencement (60) mesureur de couples de rotation, affecté à la détection du couple de rotation répercuté par le moteur rotatif (20) sur l'arbre (30) de levage et de rotation, lequel agencement (60), mesureur de couples de rotation, est pourvu d'un arbre creux de mesure (62) qui est coaxial à l'axe longitudinal (30a) dudit arbre (30) de levage et de rotation, occupe un emplacement fixe dans le sens axial, et est disposé avec faculté de rotation autour dudit axe longitudinal (30a) de l'arbre (30) de levage et de rotation, lequel arbre (30) de levage et de rotation traverse coaxialement l'arbre de mesure (62), sachant que ledit arbre de mesure (62) est couplé cinématiquement en rotation au rotor (23) du moteur rotatif (20), à une extrémité, et est couplé cinématiquement en rotation à l'arbre (30) de levage et de rotation, à son autre extrémité, et sachant que ledit agencement (60) mesureur de couples de rotation est muni d'un ensemble détecteur (68, 69) conçu pour détecter la torsion dudit arbre de mesure (62), provoquée par le couple de rotation.

2. Dispositif de levage et de rotation selon la revendication 1, **caractérisé par le fait qu'**il est doté, en vue de la liaison cinématique de l'armature (13) avec la première extrémité longitudinale (31) de l'arbre (30) de levage et de rotation, d'un élément de liaison (40) qui, fixé à ladite armature (13) et audit arbre (30) de levage et de rotation, s'étend transversalement par rapport à l'axe longitudinal (30a) dudit arbre (30) de levage et de rotation et par rapport à l'axe de mouvement (13a) de ladite armature (13) du moteur linéaire (10).

3. Dispositif de levage et de rotation selon la revendication 2, **caractérisé par le fait qu'**une fixation tournante (42), dévolue au montage rotatif de la première extrémité longitudinale (31) de l'arbre (30) de levage et de rotation, est implantée sur l'élément de liaison (40), et **par le fait que** ladite première extrémité longitudinale (31) de l'arbre (30) de levage et de rotation est reliée rigidement audit élément de liaison (40) par rapport au mouvement dudit arbre (30) de levage et de rotation dans la direction de son axe longitudinal (30a).

4. Dispositif de levage et de rotation selon l'une des revendications 1 à 3, **caractérisé par le fait que** l'arbre (30) de levage et de rotation est de réalisation creuse, de part en part, et **par le fait que** l'élément de liaison (40) est pourvu d'un raccord intérieur (43) en liaison communicante avec ledit arbre (30) de levage et de rotation, qui est dédié à l'introduction d'air comprimé ou d'un vide dans ledit arbre (30) de levage et de rotation.

5. Dispositif de levage et de rotation selon la revendication 4, **caractérisé par le fait qu'**il est muni d'un raccord extérieur fixe (47), dévolu à la délivrance d'air comprimé ou d'un vide, et **par le fait que** ledit raccord extérieur (47) est relié au raccord intérieur (43) par l'intermédiaire d'un conduit flexible (46) enroulé hélicoïdalement autour de l'axe longitudinal (30a) de l'arbre (30) de levage et de rotation.

6. Dispositif de levage et de rotation selon l'une des revendications 1 à 5, **caractérisé par le fait qu'**il est doté, par ailleurs, d'un transmetteur (50) de forces constantes en vue de solliciter l'arbre (30) de levage et de rotation par une force constante, au moins par zones, dans la direction de l'axe longitudinal (30a) dudit arbre (30) de levage et de rotation.

7. Dispositif de levage et de rotation selon la revendication 6, **caractérisé par le fait que** le transmetteur (50) de forces constantes est réalisé sous la forme d'un transmetteur de forces magnétiques constantes comprenant une partie (51) en un matériau magnétiquement conducteur, qui occupe un emplacement fixe, et une partie (52) à magnétisation diamétrale qui est implantée avec mobilité par rapport à ladite partie (51) à emplacement fixe, parallèlement à l'axe longitudinal (30a) de l'arbre (30) de levage et de rotation, sachant que ladite partie (52), implantée avec mobilité, est couplée rigidement audit arbre (30) de levage et de rotation par rapport au mouvement dudit arbre (30) de levage et de rotation dans la direction de son axe longitudinal (30a).

8. Dispositif de levage et de rotation selon la revendication 2 et l'une des revendications 6 ou 7, **caractérisé par le fait que**, pour instaurer le couplage rigide de la partie (52) à implantation mobile du transmetteur (50) de forces constantes, avec l'arbre (30) de levage et de rotation, ladite partie (52) à implantation mobile dudit transmetteur (50) de forces constantes est reliée cinématiquement à l'élément de liaison (40).

9. Dispositif de levage et de rotation selon l'une des revendications 6 à 8, **caractérisé par le fait que** le transmetteur (50) de forces constantes est conçu pour solliciter l'arbre (30) de levage et de rotation par au moins deux forces constantes d'ampleurs différentes, en fonction de l'emplacement longitudinal dudit arbre.

10. Dispositif de levage et de rotation selon l'une des revendications 6 à 9, **caractérisé par le fait que** le moteur rotatif (20), le moteur linéaire (10) et le transmetteur (50) de forces constantes sont logés dans un carter commun (1).
